# FASCICULE DE BREVET EUROPEEN

(11) **EP 0 497 657 B1**
(45) Date de publication et mention de la délivrance du brevet: **04.08.1993**
(21) Numéro de dépôt: 92400155.5
(22) Date de dépôt: 21.01.1992
(51) Int. Cl.: B01J 27/32

(54) **Procédé pour la récupération des catalyseurs à base d'antimoine utilisés pour la fluoration d'hydrocarbures halogénés**
Verfahren zur Rückgewinnung von bei der Fluorierung von Halogenkohlenwasserstoffen verwendeten Antimon-Katalysatoren
Process for recovering antimony containing catalysts, used for the fluorination of halogenated hydrocarbons

(30) Priorité: 30.01.1991 FR 9101031
(43) Date de publication de la demande: 05.08.1992
(73) Titulaire: ELF ATOCHEM S.A., 92800 Puteaux (FR)
(72) Inventeur: Lacroix, Eric, F-69008 Lyon (FR); Lantz, André, F-69390 Vernaison (FR)
(74) Mandataire: Leboulenger, Jean

(56) Documents cités:
- FR-A- 2 129 332
- FR-A- 2 320 777

## Description

La présente invention concerne la fabrication de fluoroalcanes et a plus particulièrement pour objet un procédé permettant de récupérer et recycler les catalyseurs antimoniés mis en oeuvre pour la fluoration d'hydrocarbures halogénés.

Actuellement, de nombreuses recherches sont menées afin de synthétiser des substituts aux chlorofluorocarbones (CFC). Une partie de ces produits de substitution sont des fluoroalcanes comprenant au moins deux atomes de carbone. Parmi les procédés de synthèse, la fluoration des hydrocarbures halogénés par l'acide fluorhydrique en présence d'un catalyseur à base d'antimoine est une voie de synthèse industrielle.

Dans ces procédés, l'espèce catalytique est constituée par un halogénure d'antimoine V. Cette espèce catalytique est préparée soit avant la réaction de fluoration, soit in situ à partir de trichlorure d'antimoine, de chlore et d'un agent fluorant comme l'acide fluorhydrique, ou par fluoration directe du pentachlorure d'antimoine. Comme dans tout procédé catalytique, on observe une désactivation du catalyseur due à l'accumulation d'impuretés (eau, sels métalliques) et à la formation de composés organiques à points d'ébullition élevés, qui conduit à une activité catalytique inférieure au seuil de rentabilité. C'est pourquoi il s'avère nécessaire de purger le réacteur et d'ajouter du catalyseur frais.

Le mélange de catalyseur à l'antimoine désactivé comprend des halogénures d'antimoine pentavalent (SbClₓF_{y} ; 0 ≦ x, y ≦ 5 et x + y = 5) mais également des halogénures d'antimoine trivalent ; par ailleurs, ce mélange est aussi constitué de composés organiques comprenant des réactifs organiques, des produits de réaction et notamment des composés insaturés. La présence d'hydracides (HCl, HF) et la teneur en antimoine dépendent des différents procédés de catalyse.

Le traitement du catalyseur usagé pour stockage en décharge conduit souvent à des quantités importantes de déchets au coût de stockage élevé. Pour sauvegarder l'environnement et pour des raisons économiques, la récupération et le recyclage du catalyseur deviennent de plus en plus souhaitables. Cependant, les procédés actuels de retraitement du catalyseur sont soit trop complexes pour être mis en oeuvre, soit conduisent à un catalyseur récupéré qui nécessite un traitement ultérieur avant recyclage.

Ainsi, le brevet FR 2 281 893 décrit un procédé de recyclage de l'antimoine sous forme de pentachlorure d'antimoine. La pureté du catalyseur régénéré est élevée (> 95 %) mais le procédé nécessite de nombreuses étapes : chloration de l'antimoine trivalent en antimoine pentavalent ; fluoration de l'antimoine pentavalent et des organiques à points d'ébullition élevés par l'acide fluorhydrique ; concentration du milieu réactionnel ; chloration des composés antimoniés en pentachlorure d'antimoine et distillation de ce dernier.

Le brevet DE 2 140 188 décrit un procédé de recyclage de l'antimoine sous forme de trichlorure d'antimoine. Là encore, le procédé est relativement complexe puisqu'il nécessite une hydrolyse du catalyseur, suivie d'une précipitation de l'antimoine sous forme d'oxyde, puis mise en solution du précipité, réduction de l'antimoine pentavalent, précipitation de l'antimoine trivalent, dissolution dans l'acide chlorhydrique et finalement distillation du trichlorure d'antimoine.

Le brevet DE 2 110 797 revendique un procédé basé sur une transformation de l'antimoine usagé en pentachlorure d'antimoine. Le mélange réactionnel est concentré en présence de CCl₄ pour transformer les fluorures d'antimoine en chlorures d'antimoine, pour éliminer une partie des organiques et pour décomposer thermiquement le pentachlorure d'antimoine en trichlorure d'antimoine et en chlore. Après élimination d'une seconde partie des organiques par filtration-lavage avec CCl₄, le trichlorure d'antimoine est chloré en pentachlorure d'antimoine, ce dernier étant ensuite séparé par distillation.

Finalement, le brevet FR 2 320 777 décrit un procédé de récupération-recyclage du catalyseur antimonié sous forme de pentachlorure d'antimoine. Le brut réactionnel renfermant le catalyseur usagé est chauffé tout en étant soumis au barbotage d'un gaz inerte (azote, F 113...) avec au besoin addition d'HF, afin de transformer les organiques à points d'ébullition élevés en composés fluorés ayant des points d'ébullition plus bas. Le catalyseur est ensuite chloré en présence de chlore et de tétrachlorure de carbone pour le transformer en pentachlorure d'antimoine ; ce dernier est ensuite récupéré par distillation.

Dans tous les brevets cités précédemment, le recyclage du catalyseur antimonié est souvent relativement complexe, mais surtout il nécessite dans tous les cas l'ajout de tiers corps (acide fluorhydrique, agents de réduction, agents de précipitation, chlore, tétrachlorure de carbone, solvant, gaz inerte...) ou des étapes complémentaires (réduction thermique, lavage...) qui n'interviennent que pour la récupération et la purification de l'antimoine. Ces tiers corps et ces étapes complémentaires n'interviennent pas dans la réaction de fluoration pour laquelle le catalyseur est utilisé et leur coût n'est donc pas rentabilisé.

La présente invention a maintenant pour but de fournir un procédé simple de récupération et recyclage du catalyseur antimonié issu des unités de fluoration ou chlorofluoration des hydrocarbures halogénés comprenant au moins deux atomes de carbone. Ce procédé comprend les étapes suivantes :
**(a)** Concentration de la solution de catalyseur usagé jusqu'à la limite de distillation du trichlorure d'antimoine ;
**(b)** Addition de chlore à la solution concentrée pour transformer le trichlorure d'antimoine en pentachlorure d'antimoine ; et
**(c)** Distillation du pentachlorure d'antimoine.

L'étape de concentration (a) permet non seulement d'éliminer les organiques à bas points d'ébullition, mais également de réduire l'antimoine pentavalent par réaction avec les oléfines présentes dans le milieu réactionnel et de transformer la totalité du catalyseur en trichlorure d'antimoine par fluoration des organiques sous-fluorés également présents dans le milieu réactionnel (SbClₓF_{y} → SbCl₃).

Les organiques ayant un point d'ébullition proche de celui du pentachlorure d'antimoine sont distillés avant l'étape de chloration. Ainsi, l'étape (c) de distillation permet de récupérer 80 à 95 % de l'antimoine sous forme de pentachlorure d'antimoine de grande pureté (> 97 %) qui peut être recyclé au réacteur de fluoration.

Ce nouveau procédé qui ne nécessite pas l'ajout de tiers corps ou d'étapes complémentaires non valorisables, va maintenant être décrit de façon plus détaillée.

Le catalyseur antimonié usagé, auquel le procédé de retraitement selon la présente invention peut être appliqué, provient en majeure partie d'unités de fabrication de fluoroalcanes comprenant entre autres les dichlorotétrafluoro éthanes (F114 et F114a), le chloro-1 trifluoro-2,2,2 éthane (F 133a), le tétrafluoro-1,1,1,2 éthane (F 134a), le dichloro-1,1 fluoro-1 éthane (F 141b), le chloro-1 difluoro-1,1 éthane (F 142b), le trichloro-1,1,2 difluoro-2,2 éthane (F 122), le dichloro-1,1 trifluoro-2,2,2 éthane (F 123). Leur synthèse est généralement basée sur une fluoration par l'acide fluorhydrique d'alcanes, d'alcènes ou d'alcynes comprenant au moins deux atomes de carbone, partiellement ou totalement halogénés et, de toute manière, peu ou pas fluorés tels que le trichloroéthylène (F 1120), le tétrachloroéthylène (F 1110), le dichloro-1,1 éthylène (F 1130a), le trichloro-1,1,1 éthane (F 140a) ou tout autre composé de ce type. Ces réactions peuvent être catalysées par un halogénure d'antimoine dont le précurseur peut être entre autres SbCl₅, SbCl₃ + Cl₂, etc...

Dans le présent procédé de récupération de l'antimoine sous forme SbCl₅, la solution de catalyseur désactivé peut contenir, en tant que composés minéraux majoritaires, des chlorures et/ou des fluorures d'antimoine trivalent et/ou pentavalent. La teneur en antimoine métal peut varier entre 0 et 50 % mais elle est plus généralement comprise entre 3 et 30 %, et les teneurs les plus courantes sont de l'ordre de 3 à 15 %. La proportion de Sb^{V} par rapport à Sb total peut varier de 0 à 100 %, mais généralement, en sortie de réacteur, l'absence de chlore, la présence d'oléfines réactives ou de précurseurs d'oléfines (composés susceptibles de se déshydrochlorer ou de se déshydrofluorer en présence de Sb^{V}) conduisent à une réduction partielle de l'antimoine V en antimoine III ; c'est pourquoi la proportion de Sb^{V} ne représente généralement que 0 à 50 % de Sb total et plus précisément de 0 à 20 %. Par ailleurs, la solution de catalyseur desactivé renferme divers composés organiques comprenant entre autres des oléfines telles que CHCl=CCl₂ (F 1120), CCl₂=CCl₂ (F 1110), CH₂=CCl₂ (F 1130a), CF₂=CHCl (F 1122), CH₂=CFCl (F 1131a), CF₂=CCl₂ (F 1112a), susceptibles de réagir avec les dérivés de Sb^{V} et de réduire ces derniers à l'état de Sb^{III.} La solution de catalyseur desactivé peut également contenir des halogénoalcanes tels que CH₃-CCl₃ (F140a), CH₃-CCl₂F (F141b), CH₃-CClF₂ (F142b), CF₃-CH₂Cl (F133a), CF₂Cl-CH₂Cl (F132b), CH₂Cl-CCl₂F (F131a), CH₂Cl-CCl₃ (F130a), CHCl₂-CHCl₂ (F130), CF₂Cl-CHCl₂ (F122), CF₃-CHCl₂ (F123), CF₂Cl-CHFCl (F123a) qui sont générateurs potentiels d'oléfines par déshydrohalogénation catalysée par les espèces à base d'antimoine V. Dans tous les cas, le rapport molaire : oléfines + précurseurs d'oléfines/Sb^{V} doit être supérieur à 1 afin d'avoir une réduction totale de l'antimoine V à la fin de l'étape (a) de concentration décrite ci-après ; cependant, étant donné qu'il existe d'autres voies de transformation des oléfines (par exemple, polymérisation) que la réaction avec les dérivés de Sb^{V}, on préfère un rapport molaire au moins égal à 4. Finalement, la solution de catalyseur desactivé peut contenir des composés organiques à points d'ébullition élevés ; ces "lourds" qui sont formés au cours de la réaction principale de fluoration par une chloration des oléfines et des hydroalcanes, sont la cause principale nécessitant une purge du réacteur.

La première étape (a) du procédé selon l'invention consiste en une concentration de la solution de catalyseur desactivé jusqu'à la limite de distillation du trichlorure d'antimoine. Afin de ne pas nécessiter une puissance de chauffe trop importante et de ne pas former trop de produits goudronneux, cette concentration peut être réalisée par distillation sous pression réduite ; on peut aussi opérer en deux temps, d'abord à pression atmosphérique ou sous pression modérément réduite (entre 100 et 6,7 kPa), puis sous pression plus réduite (en-dessous de 6,7 kPa). Bien évidemment, cette concentration conduit à l'élimination des composés organiques qui ont un point d'ébullition inférieur à celui de SbCl₃ (Eb. : 143,5°C sous 9,33 kPa) mais parallèlement, elle doit permettre d'une part la réduction de Sb^{V} en Sb^{III} par chloration des oléfines, et d'autre part la transformation de SbClₓF_{y} en SbCl_{x+y} par fluoration des organiques peu ou pas fluorés ; c'est pourquoi il est nécessaire d'effectuer cette concentration à une température comprise entre 70 et 140°C. Ainsi, les composés antimoniés sont convertis en quasi-totalité en trichlorure d'antimoine et, par ailleurs, les composés organiques ayant des points d'ébullition proches de celui de SbCl₅ sont éliminés.

La seconde étape consiste en l'addition de chlore à la solution concentrée pour transformer SbCl₃ en SbCl₅. Le rapport molaire Cl₂/SbCl₃ doit être au moins égal à 1,3. Le chlore est introduit dans le brut réactionnel par l'intermédiaire d'un tube plongeur et la température du milieu est maintenue entre 75 et 120°C, de préférence entre 80 et 100°C. Après cette opération, le milieu réactionnel est constitué du catalyseur sous forme SbCl₅, d'impuretés métalliques (Fe...) et des organiques à points d'ébullition élevés (point d'ébullition supérieur à celui de SbCl₃).

La troisième étape consiste en la distillation du pentachlorure d'antimoine sous pression réduite afin d'éviter sa décomposition. La pression de distillation peut être comprise entre 1 et 14 kPa et, plus particulièrement, entre 2 et 8 kPa ; dans tous les cas, la température n'excède pas 120°C. Il est avantageux en fin de distillation d'introduire une petite quantité de chlore suffisante pour réoxyder le SbCl₃ formé par réduction thermique de SbCl₅ pendant la distillation. La distillation est poursuivie jusqu'à distillation totale de SbCl₅ dans les conditions opératoires fixées.

Le pied résiduel de distillation se compose, d'une part, de produits organiques goudronneux dus à des réactions de polymérisation et de décomposition et, d'autre part, de composés métalliques, notamment des complexes fer-antimoine stables. Par un traitement alcalin, les dérivés antimoniés peuvent être transformés en oxydes ou hydroxydes, puis être isolés.

Le procédé selon la présente invention permet de récupérer 80 à 95 % de l'antimoine usagé contenu dans le brut réactionnel. En jouant sur la différence entre le point d'ébullition de SbCl₃ et celui de SbCl₅, cet antimoine est obtenu après distillation sous forme SbCl₅ avec une pureté supérieure à 97 % et il peut donc être directement recyclé.

Les exemples suivants illustrent l'invention sans la limiter.

### EXEMPLE 1

Le brut de catalyseur usagé à traiter contient 12,2 % en poids d'antimoine (dont 95 % sous forme Sb³⁺) et environ 200 ppm d'impuretés métalliques (principalement Fe et As), le reste comprenant majoritairement des composés organiques identifiés et une petite proportion de composés organiques non identifiés ("lourds"). La répartition (% molaires) des composés organiques identifiés est la suivante : F141b (11 %), F1130a (4 %), F140a (5 %), F131a (33 %), F1120 (7 %), F130a (39 %) et F130 (1 %).

L'appareillage utilisé comprend un réacteur de 1 litre en inox, muni d'une double enveloppe et équipé d'une agitation, d'un tube plongeur permettant l'introduction de chlore et d'une vanne de vidange. Ce réacteur est surmonté d'une colonne en inox remplie d'anneaux en inox et prolongée d'une tête de colonne, d'un réfrigérant à eau et d'un ballon de réception en inox. L'appareillage comprend en outre, en plusieurs points, des moyens de contrôle de la température et de la pression.

Dans le réacteur, on charge 1000 g de catalyseur usagé, puis on procède à une première distillation sous une pression de 10,7 kPa, comprenant un palier de température d'une heure à 80°C (afin de réduire la totalité de Sb^{V} et d'éliminer les fluorures inorganiques), puis une montée en température pour atteindre 98°C en pied. On recueille ainsi un premier distillat de 635 g contenant seulement 200 ppm d'antimoine total. Une seconde distillation, sous une pression de 4 kPa, permet d'éliminer un second distillat de 61 g contenant 0,8 % d'antimoine total. La température de pied est limitée à 115°C et celle de tête n'a pas dépassé 102°C.

A la solution concentrée, on ajoute alors 1,3 mole de chlore à 100°C sous agitation. Le chlore est additionné lentement (6 heures) et la température du milieu réactionnel est maintenue aux environs de 100°C (réaction exothermique).

On procède ensuite à la distillation du pentachlorure d'antimoine sous une pression de 4 kPa. Sous cette pression, ce composé a un point d'ébullition proche de 81-83°C. Une augmentation de température en pied de distillation jusqu'à 111°C conduit à un distillat de 251 g. Ce dernier distillat se présente sous forme d'un liquide jaune qui contient 40 % en poids d'antimoine total, ce qui correspond à une teneur en SbCl₅ supérieure à 98 %. A ce stade, 83 % de l'antimoine contenu dans le brut initial a été récupéré sous forme SbCl₅ distillé ; la pureté de ce dernier est suffisante pour ne pas nécessiter un traitement ultérieur avant recyclage.

### EXEMPLE 2

On opère comme à l'exemple 1, sauf en ce qui concerne la dernière étape de distillation du pentachlorure d'antimoine. En effet, après avoir distillé la majorité de ce dernier (température en pied 102°C), on arrête momentanément la distillation pour chlorer le trichlorure d'antimoine résultant de la réduction thermique d'une partie du pentachlorure d'antimoine ; à cet effet, on ajoute 0,3 mole de chlore. Après cette chloration, on termine la distillation du pentachlorure d'antimoine. Cette modification permet d'améliorer le taux de récupération de l'antimoine (271 g de SbCl₅ récupéré, soit un taux de récupération de Sb voisin de 90 %).

## Revendications

1. Procédé de récupération de l'antimoine contenu dans une solution de catalyseur antimonié usagé, issue d'unités de fluoration ou chlorofluoration des hydrocarbures halogénés comprenant au moins deux atomes de carbone, ladite solution contenant en outre divers composés organiques consistant essentiellement en oléfines et/ou précurseurs d'oléfines caractérisé en ce qu'il consiste :
**(a)** à concentrer la solution de catalyseur usagé jusqu'à la limite de distillation du trichlorure d'antimoine, cette opération étant effectuée à une température comprise entre 70 et 140°C et avec un rapport molaire : oléfines + précurseurs d'oléfines/antimoine V maintenu supérieur à 1 jusqu'à la fin de cette étape, puis
**(b)** à ajouter du chlore à la solution concentrée pour transformer SbCl₃ en SbCl₅, cette chloration étant effectuée à une température comprise entre 75 et 120°C et avec un rapport molaire Cl₂/SbCl₃ au moins égal à 1,3, et enfin
**(c)** à distiller le pentachlorure d'antimoine sous pression réduite (1 à 14 kPa) à une température n'excédant pas 120°C.

2. Procédé selon la revendication 1, dans lequel la teneur en antimoine métal de la solution initiale est comprise entre 3 et 30 % en poids, en particulier entre 3 et 15 %.

3. Procédé selon la revendication 2, dans lequel la proportion de Sb^{V}, par rapport à Sb total, est comprise entre 0 et 50 %, plus particulièrement entre 0 et 20 %.

4. Procédé selon l'une des revendications 1 à 3, dans lequel le rapport molaire : oléfines + précurseurs d'oléfines/Sb^{V} est au moins égal à 4.

5. Procédé selon l'une des revendications 1 à 4, dans lequel l'étape (a) est effectuée sous pression réduite.

6. Procédé selon l'une des revendications 1 à 5, dans lequel l'étape de chloration (b) est effectuée à une température comprise entre 80 et 100°C.

7. Procédé selon l'une des revendications 1 à 6, dans lequel la distillation (c) du SbCl₅ est effectuée sous une pression comprise entre 2 et 8 kPa.

8. Procédé selon l'une des revendications 1 à 7, dans lequel, avant la fin de l'étape (c), on ajoute du chlore en quantité suffisante pour réoxyder le trichlorure d'antimoine formé pendant la distillation.

## Patentansprüche

1. Verfahren zur Rückgewinnung des Antimons aus der Lösung eines gebrauchten antimonhaltigen Katalysators, die aus Anlagen zur Fluorierung oder Chlorofluorierung halogenierter Kohlenwasserstoffe, die mindestens zwei Kohlenstoffatome enthalten, stammt und außerdem verschiedene organische Verbindungen, im wesentlichen Olefine und / oder Vorstufen von Olefinen, enthält,
dadurch gekennzeichnet, daß es darin besteht
(a) die Lösung des gebrauchten Katalysators bis zur Destillationsgrenze des Antimontrichlorids zu konzentrieren, und zwar bei einer Temperatur zwischen 70 °C und 140 °C, wobei das Molverhältnis : Olefine + Olefinvorstufen / fünfwertiges Antimon bis zum Ende dieser Stufe größer als 1 gehalten wird;
(b) sodann Chlor zu der konzentrierten Lösung zuzugeben, um SbCl₃ in SbCl₅ umzuwandeln, wobei diese Chlorierung bei einer Temperatur zwischen 75 °C und 120 °C und mit einem Molverhältnis Cl₂ / SbCl₃ von mindestens 1,3 durchgeführt wird;
(c) und schließlich das Antimonpentachlorid bei vermindertem Druck (1 bis 14 kPa) und bei einer Temperatur, die 120 °C nicht überschreitet, abdestilliert wird.

2. Verfahren nach Anspruch 1, bei dem der Gehalt an metallischem Antimon in der Ausgangslösung zwischen 3 und 30 Gewichtsprozenten liegt, insbesondere zwischen 3 und 15 Gewichtsprozenten.

3. Verfahren nach Anspruch 2, bei dem der Anteil von Sb^{V}, bezogen auf die Gesamtmenge an Antimon, zwischen 0 und 50 % , insbesondere zwischen 0 und 20 %, liegt.

4. Verfahren nach einem der Ansprüche 1 bis 3, bei dem das Molverhältnis Olefine + Olefinvorstufen / Sb^{V} mindestens gleich 4 ist.

5. Verfahren nach einem der Ansprüche 1 bis 4, bei dem die Stufe (a) bei vermindertem Druck ausgeführt wird.

6. Verfahren nach einem der Ansprüche 1 bis 5, bei dem die Chlorierungsstufe (b) bei einer Temperatur zwischen 80 und 100 °C ausgeführt wird.

7. Verfahren nach einem der Ansprüche 1 bis 6, bei dem die Destillabon (c) des SbCl₅ bei einem Druck zwischen 2 und 8 kPa ausgeführt wird.

8. Verfahren nach einem der Ansprüche 1 bis 7, bei dem vor dem Ende der Stufe (c) eine zum Aufoxydieren des während der Destillation entstehenden Antimontrichlorides ausreichende Menge Chlor zugegeben wird.

## Claims

1. Process for recovering the antimony contained in a solution of used antimony-containing catalyst, emanating from units for the fluorination or chlorofluorination of halogenated hydrocarbons comprising at least two carbon atoms, the said solution containing, in addition, various organic compounds consisting essentially of olefins and/or olefin precursors, characterised in that it consists in:
(a) concentrating the solution of used catalyst to the limit of distillation of antimony trichloride, this operation being performed at a temperature of between 70 and 140°C and with a mole ratio (olefins + olefin precursors)/antimony V maintained at greater than 1 until the end of this step, then
(b) adding chlorine to the concentrated solution to convert SbCl₃ to SbCl₅, this chlorination being performed at a temperature of between 75 and 120°C and with a mole ratio Cl₂/SbCl₃ equal to at least 1.3, and finally
(c) distilling the antimony pentachloride under reduced pressure (1 to 14 kPa) at a temperature not exceeding 120°C.

2. Process according to Claim 1, in which the antimony metal content of the initial solution is between 3 and 30% by weight, and especially between 3 and 15%.

3. Process according to Claim 2, in which the proportion of Sb^{V} relative to total Sb is between 0 and 50%, and more especially between 0 and 20%.

4. Process according to one of Claims 1 to 3, in which the mole ratio (olefins + olefin precursors)/Sb^{V} is equal to at least 4.

5. Process according to one of Claims 1 to 4, in which step (a) is performed under reduced pressure.

6. Process according to one of Claims 1 to 5, in which the chlorination step (b) is performed at a temperature of between 80 and 100°C.

7. Process according to one of Claims 1 to 6, in which the distillation (c) of SbCl₅ is performed under a pressure of between 2 and 8 kPa.

8. Process according to one of Claims 1 to 7, in which, before the end of step (c), chlorine is added in an amount sufficient to reoxidise the antimony trichloride formed during the distillation.
